# FASCICULE DE BREVET EUROPEEN

(11) **EP 1 431 358 B1**
(45) Date de publication et mention de la délivrance du brevet: **31.05.2006**
(21) Numéro de dépôt: 03292844.2
(22) Date de dépôt: 17.11.2003
(51) Int. Cl.: C09D 175/04, C08J 7/04, C09D 133/06

(54) **Nouvelles compositions de peinture pour élastomères**
Beschichtungszusammensetzungen für Elastomere
Coating composition for elastomers

(30) Priorité: 20.11.2002 FR 0214512
(43) Date de publication de la demande: 23.06.2004
(73) Titulaire: HUTCHINSON, 75008 Paris (FR)
(72) Inventeur: Thenault, Nathalie, 45210 Ferrieres (FR); Desaindes, Céline, 77140 Nemours (FR)
(74) Mandataire: Corizzi, Valérie

(56) Documents cités:
- EP-A- 0 350 157
- WO-A-86/02655
- WO-A-02/062894
- US-A- 5 500 253

## Description

La présente invention a pour objet de nouvelles compositions de peinture ou de vernis destinées à être appliquées sur des pièces en élastomère. Il a également pour objet les articles en élastomère peints à l'aide de telles compositions.

Les joints d'étanchéité de carrosseries automobiles ou d'ouvrants de bâtiments sont généralement produits en matériau élastomérique et ils sont soumis à de fortes contraintes.

Habituellement, ils sont recouverts d'un film de protection provenant de la dépose d'une peinture sous forme liquide suivie d'un séchage. On attend d'un tel film de protection : qu'il protège la pièce en élastomère contre l'abrasion ; qu'il améliore son aspect extérieur, notamment en lui conférant la teinte souhaitée ; qu'il réduise son coefficient de frottement ; qu'il résiste à la lumière et aux agressions climatiques ; qu'il diminue les vibrations sonores, notamment lors du frottement d'une vitre ou d'une pièce de carrosserie. Une telle peinture doit en outre, une fois sèche, être suffisamment souple pour suivre les mouvements de la pièce qu'elle protège sans craqueler ni plisser.

Enfin, de façon générale, on préfère des peintures ou des vernis à l'eau, parce qu'ils sont moins polluants, et on cherche à produire des peintures ou des vernis ayant la meilleure efficacité possible pour un coût optimisé.

Des peintures pour pièces en élastomère existent déjà dans le commerce. Elles sont généralement à base soit de polyuréthane, soit de silicones, soit de polymères fluorés.

Toutefois, aucun de ces systèmes de polymères ne donne entièrement satisfaction dans cette application :

Les peintures à base de silicone sont satisfaisantes du point de vue de la réduction du coefficient de frottement mais sont moyennement satisfaisantes en termes de tenue à la lumière, d'absorption des vibrations sonores, d'aspect et de souplesse. Elles sont insuffisantes en termes de coût et de résistance à l'abrasion.

Les peintures à base de polyuréthane sont satisfaisantes du point de vue de la résistance à l'abrasion, mais sont moyennement satisfaisantes en termes de coût et d'aspect. Elles sont insuffisantes en termes d'absorption des vibrations sonores et de réduction du coefficient de frottement. Elles sont très insuffisantes en termes de tenue à la lumière et aux agressions climatiques.

Les peintures à base de polymère fluoré sont satisfaisantes du point de vue de la réduction du coefficient de frottement mais sont moyennement satisfaisantes en termes de tenue à la lumière, d'absorption des vibrations sonores, d'aspect et de résistance à l'abrasion. Elles sont insuffisantes en termes de coût et de souplesse.

La demanderesse s'est donc donnée pour objectif la formulation d'une composition de peinture ou de vernis qui donne un résultat satisfaisant ou très satisfaisant pour tous les critères d'évaluations énoncés ci-dessus. En outre, elle a orienté ses recherches dans le domaine des peintures aqueuses afin de minimiser les nuisances envers l'environnement. Un critère de sélection supplémentaire a été une bonne résistance des films de peinture aux produits de lavage couramment employés pour le lavage des voitures ou des produits de lavage ménagers.

L'invention a pour objet une nouvelle composition de peinture ou de vernis comprenant, en matières sèches :
- de 10 à 50 parts en poids d'au moins un polyuréthane sous forme d'émulsion aqueuse,
- de 10 à 30 parts en poids d'au moins deux polymères ou copolymères acryliques sous forme d'émulsion aqueuse,
- de 10 à 70 parts en poids de charges minérales ou organiques,
- de 5 à 20 parts en poids d'agents de mise en oeuvre,
- de 0 à 10 parts en poids de réticulant,
ladite composition comprenant en outre de 40 à 150 parties en poids d'eau, en fonction de la concentration des polymères dans leur phase aqueuse et de la dilution désirée. Les parts sont données en poids de matière active dans la composition. Les parts d'eau correspondent au minimum à l'eau comprise dans l'émulsion de polyuréthane et dans les émulsions de polymère ou de copolymère acrylique, de l'eau peut également être incorporée à la composition pour ajuster sa dilution, notamment en fonction du mode d'application.

Les polyuréthanes utilisables dans les compositions de l'invention sont des polymères en émulsion aqueuse issus de la réaction d'un polyisocyanate, généralement un di-isocyanate, et d'un polyol. Parmi les polyols utilisables, on peut citer notamment les polyéthers polyols, les polyesters polyols, les polycarbonates polyols, les polycaprolactone polyols, les polyols acryliques. Parmi ces familles de polyuréthanes, on utilise préférentiellement ceux qui sont dérivés de polyesters aliphatiques. De préférence, on choisit un polyuréthane répondant aux critères suivants :
- résistance à la rupture supérieure ou égale à 25MPa, préférentiellement supérieure ou égale à 30MPa,
- allongement à la rupture supérieur ou égal à 400%, préférentiellement supérieur ou égal à 450%
- module à 100% inférieur ou égal à 10MPa, préférentiellement inférieur ou égal à 8MPa,
ces mesures étant faites sur des éprouvettes haltères conformément à la norme NFT 46-002 sur films secs.

Parmi les polyuréthanes commerciaux utilisables dans la présente invention, on peut citer notamment le produit commercialisé par la société BAXENDEN Ltd sous la référence commerciale Witcobond 781.

Les polymères ou copolymères acryliques utilisables selon la présente invention sont des polymères ou copolymères en émulsion aqueuse ayant une température de transition vitreuse comprise entre -40°C et +5°C. Les compositions de l'invention comprennent un mélange de polymères ou copolymères acryliques, d'au moins deux polymères ou copolymères acryliques, l'un ayant une température de transition vitreuse comprise entre 0°C et 5°C, et l'autre ayant une température de transition vitreuse comprise entre -40°C et -30°C. Parmi les polymères ou copolymères acryliques susceptibles d'être utilisés dans les compositions selon la présente invention, on peut citer en particulier celui commercialisé par la société RHODIA sous la référence commerciale Rhodopas DS 1022, celui commercialisé par la société AVECIA Resins sous la référence commerciale Néocryl XK-90. Avantageusement, on utilise un mélange de Rhodopas DS 1022 et de Néocryl XK-90.

Parmi les charges utilisables dans les compositions selon la présente invention, on peut citer en particulier : les pigments, les agents matants, les agents glissants.

Parmi les agents de mise en oeuvre utilisables dans les compositions selon la présente invention, on peut citer en particulier : tous les agents susceptibles de modifier la rhéologie de la composition, et notamment les épaississants.

Parmi les réticulants utilisables dans les compositions selon la présente invention, on choisit de préférence un produit de la famille des organo-silanes ou de la famille des isocyanates bloqués.

Selon une première variante préférée de l'invention, la composition de peinture de l'invention comprend :
- de 10 à 30 parts en poids d'au moins un polyuréthane sous forme d'émulsion aqueuse,
- de 10 à 30 parts en poids d'au moins deux polymères ou copolymères acryliques sous forme d'émulsion aqueuse,
- de 10 à 45 parts en poids de charges minérales ou organiques,
- de 5 à 15 parts en poids d'agents de mise en oeuvre,
- de 0 à 10 parts en poids de réticulant,
- de 40 à 150 parts en poids d'eau.

De préférence, la composition de peinture de l'invention comprend :
- de 15 à 25 parts en poids d'au moins un polyuréthane sous forme d'émulsion aqueuse,
- de 15 à 25 parts en poids d'au moins deux polymères ou copolymères acryliques sous forme d'émulsion aqueuse,
- de 18 à 32 parts en poids de charges minérales ou organiques,
- de 8 à 12 parts en poids d'agents de mise en oeuvre,
- de 1 à 4 parts en poids de réticulant
- de 50 à 70 parts en poids d'eau.

Les parts sont données en poids de matière active dans la composition.

Encore plus préférentiellement, la composition de l'invention comprend une quantité sensiblement équivalente, en poids de matière active, de polyuréthane et de polymères ou copolymères acryliques.

De manière avantageuse, la composition de l'invention comprend environ :
- 20 parts en poids d'au moins un polyuréthane sous forme d'émulsion aqueuse,
- 20 parts en poids d'au moins deux polymères ou copolymères acryliques sous forme d'émulsion aqueuse,
- 10 parts en poids d'agents matants,
- 15 parts en poids de charges,
- 10 parts en poids d'agents de mise en oeuvre,
- 2 parts en poids de réticulant,
- 60 parts en poids d'eau.

Selon une autre variante préférée de la présente invention, la composition de peinture de l'invention comprend :
- de 25 à 45 parts en poids d'au moins un polyuréthane sous forme d'émulsion aqueuse,
- de 15 à 25 parts en poids d'au moins deux polymères ou copolymères acryliques sous forme d'émulsion aqueuse,
- de 18 à 50 parts en poids de charges minérales ou organiques,
- de 10 à 18 parts en poids d'agents de mise en oeuvre,
- de 1 à 4 parts en poids de réticulant
- de 50 à 70 parts en poids d'eau.

Les parts sont données en poids de matière active dans la composition.

De manière avantageuse, la composition de l'invention comprend environ :
- 40 parts en poids d'au moins un polyuréthane sous forme d'émulsion aqueuse,
- 20 parts en poids d'au moins deux polymères ou copolymères acryliques sous forme d'émulsion aqueuse,
- 15 parts en poids d'agents matants,
- 40 parts en poids de charges,
- 15 parts en poids d'agents de mise en oeuvre,
- 2 parts en poids de réticulant,
- 60 parts en poids d'eau.

Les compositions de peinture et de vernis selon la présente invention sont essentiellement destinées à être appliquées sur des articles en élastomère.

L'invention a également pour objet un procédé de protection d'une pièce en élastomère, ce procédé étant caractérisé en ce que :
- le produit de départ est une pièce en élastomère vulcanisé,
- la pièce en élastomère est traitée de façon à permettre l'adhérence sur sa surface,
- une composition de peinture ou de vernis telle que décrite ci-dessus est appliquée sur tout ou partie de la pièce en élastomère,
- la pièce recouverte d'un film de peinture ou de vernis est séchée.

Le produit de départ peut être constitué de tout matériau élastomère : Les matériaux élastomères utilisables dans le procédé selon la présente invention sont les caoutchouc naturels et synthétiques et les thermoplastiques élastomères. On peut bien évidemment utiliser un mélange de plusieurs élastomères.

Parmi les caoutchoucs synthétiques on peut citer les caoutchoucs styrène butadiène (SBR), isoprène (IR), butadiène (BR), éthylène propylène (EPR), nitrile (NBR), les caoutchouc butyl (IIR), les terpolymères d'éthylène de propylène et d'un diène (EPDM), les chloroprènes (CR), les polyéthylènes chlorosulfonés (CSM), les fluorocarbonés (FPM), les polyuréthanes (PU), les caoutchoucs nitrile+PVC (NBR/PVC), les néoprènes (CR), les caoutchoucs d'épichlorhydrine (CO), les copolymères d'épichlorhydrine (ECO), les silicones (VMQ), les silicones fluorés (FVMQ), les polyacrylates d'éthyle (ACM), les polyisobutylènes (PIB).

Parmi les thermoplastiques élastomères, on peut citer deux grandes familles : les ionomères et les copolymères blocs. Les ionomères sont des copolymères dans lesquels une petite portion des motifs constitutifs sont des groupes ioniques. Les copolymères blocs sont constitués de co-monomères séparés en longues sections de la chaîne principale. Parmi les copolymères blocs thermoplastiques élastomères on peut citer notamment les copolymères styrène butadiène styrène (SBS), styrène isoprène styrène (SIS) et styrène éthylène butadiène styrène (SEBS). Des thermoplastiques élastomères peuvent être fait à partir d'un monomère oléfinique tel que l'éthylène ou le propylène en utilisant la polymérisation catalysée par un métallocène tel que décrit dans le document WO97/44390. De tels thermoplastiques élastomères incluent notamment les polyéthylène, les polypropylène, les copolymères d'éthylène et de propylène, préférentiellement greffés d'acide acrylique, d'anhydride maléique ou de glycidyl méthacrylate à polymérisation catalysée par un métallocène, préférentiellement par un polyoctène.

Les élastomères préférentiellement utilisés dans la présente invention sont ceux choisi parmi : Le caoutchouc naturel, les caoutchoucs nitrile (NBR), les terpolymères d'éthylène de propylène et d'un diène (EPDM), les chloroprènes (CR), les polyisobutylènes. De façon avantageuse, on utilise un EPDM.

Les traitements destinés à favoriser l'adhérence sur la surface d'une pièce en élastomère sont bien connus de l'homme du métier, on peut citer notamment : traitement par effet Corona ; l'application d'un primaire d'adhérence, tel que par exemple le produit commercialisé par la société WHITFORD sous le nom commercial Xylan 4016 ; un traitement aux rayonnements ultra-violets, un traitement au plasma.

L'application du vernis ou de la peinture est fait part tout moyen connu de l'homme du métier : au pinceau, par trempage, au pistolet pneumatique, au bol électrostatique. Lorsque l'application se fait au pistolet, la peinture est déposée sur la pièce en élastomère chaude, à une température comprise entre 100°C et 130°C. Lorsque l'application se fait au bol électrostatique, la peinture est déposée sur l'article en élastomère à température ambiante. De préférence l'application se fait au pistolet pneumatique ou au bol électrostatique. De façon habituelle, on dépose la peinture de façon à obtenir un film d'une épaisseur allant de 5 à 25 µm, avantageusement de 10 à 20 µm.

Le séchage de la peinture se fait de préférence à une température supérieure ou égale à 100°C.

Notamment, grâce au procédé selon la présente invention il est possible d'obtenir un article en élastomère comportant un film de protection qui soit à la fois économique, souple, protecteur contre l'abrasion, résistant à la lumière et aux agressions climatiques, résistant aux produits de lavage, qui améliore son aspect extérieur, notamment en lui conférant la teinte souhaitée, qui réduise son coefficient de frottement, qui diminue les vibrations sonores, notamment lors du frottement d'une vitre ou d'une pièce de carrosserie. Avantageusement, les articles de l'invention sont dotés de propriétés supérieures à la pièce en matériau élastomère dont ils sont issus en ce qui concerne au moins l'un des critères suivants : protection contre l'abrasion, résistance à la lumière et aux agressions climatiques, résistance aux produits de lavage, faible coefficient de frottement, faibles vibrations sonores.

La souplesse des films obtenus peut être quantifiée : on obtient généralement des films présentant les caractéristiques suivantes : allongement à la rupture supérieur ou égal à 100%, de préférence supérieur ou égal à 150%, encore plus préférentiellement supérieur ou égal à 180%, résistance à la rupture supérieure ou égale à 3MPa, de préférence supérieur ou égal à 4MPa (ces mesures sont faites sur des éprouvettes haltères suivant la norme NFT 46-002 sur films secs). L'invention a également pour objet l'utilisation d'une composition de vernis ou de peinture telle que définie ci-dessus pour l'obtention d'un film doté de ces caractéristiques.

L'invention a également pour objet un article en élastomère caractérisé en ce qu'il est obtenu par le procédé de l'invention. Un tel article est constitué d'une pièce en matériau élastomère et d'un film de protection obtenu par le dépôt et le séchage, sur tout ou partie de la pièce en élastomère, d'une composition de peinture ou de vernis décrite ci-dessus.

Les articles préparés conformément au procédé de l'invention peuvent être utilisés notamment comme pièces d'étanchéité, en particulier comme profilé d'étanchéité dans l'industrie automobile, ou comme pièces anti-vibratoires. Ils peuvent également être utilisés dans l'étanchéité d'ouvrants de bâtiments.

### EXEMPLES

### Matériel :

La SEPAP est une enceinte de photovieillissement accéléré permettant de reproduire en conditions accélérées le vieillissement naturel.

### EXEMPLE 1

On prépare la composition de peinture suivante, dans laquelle les quantités sont exprimées en part en poids de constituant, lesdits constituants étant identifiés par leur nom commercial :

| Constituants | Quantité |
|---|---|
| Witcobond 781 | 45 |
| Néocryl XK-90 | 20 |
| Rhodopas DS 1022 | 30 |
| Byk 348 | 0,5 |
| Byk 024 | 0,3 |
| Ceraflour 920 | 8 |
| DC-84 | 2 |
| Borchigel LW-44 | 2 |
| Spheriglass 5000CP03 | 10 |
| NMP | 4 |
| Base pigmentaire | 3 |

La composition de peinture de l'invention est ensuite appliquée sur un joint en élastomère (EPDM) puis séchée. Le film obtenu (épaisseur 15µm) se caractérise par :
- une excellente tenue à la lumière (exposition pendant 300 h aux ultra-violets en SEPAP avec hydrolyse de 2h à 60°C : seule une faible décoloration est observée),
- une très bonne tenue au vieillissement (allongement à la rupture résiduel supérieur à 90% après 4 jours à 90°C),
- une bonne tenue chimique : faible évolution après mise en contact avec des produits tels que l'eau savonneuse, le liquide lave-glace,
- une grande souplesse : allongement à la rupture égal à 212%, résistance à la rupture égale à 5,6MPa (ces mesures sont faites sur des éprouvettes haltères suivant la norme NFT 46-002 sur films secs),
- une bonne tenue à l'abrasion : usure d'un textile ou d'une corde à piano contre le joint peint.

### EXEMPLE 2

On prépare la composition de peinture suivante, dans laquelle les quantités sont exprimées en part en poids de constituant, lesdits constituants étant identifiés par leur nom commercial :

| Constituants | Quantité |
|---|---|
| Witcobond 781 | 90 |
| Néocryl XK-90 | 20 |
| Rhodopas DS 1022 | 30 |
| Byk 348 | 2 |
| Byk 024 | 1 |
| Ceraflour 920 | 10 |
| DC-84 | 2 |
| Borchigel LW-44 | 1 |
| Spheriglass 5000CP03 | 15 |
| NMP | 4 |
| Base pigmentaire | 3 |
| Fluoro AQ50 | 10 |

La composition de peinture de l'invention est ensuite appliquée sur un joint en élastomère (EPDM) puis séchée. Le film obtenu (épaisseur 15µm) se caractérise par :
- une excellente tenue à la lumière (exposition pendant 300 h aux ultra-violets en SEPAP avec hydrolyse de 2 heures à 60°C : seule une faible décoloration est observée),
- une très bonne tenue au vieillissement (allongement à la rupture résiduel supérieur à 90% après 4 jours à 90°C,
- bonne tenue chimique : faible évolution après mise en contact avec des produits tels que l'eau savonneuse ou le liquide lave-glace,
- une grande souplesse : allongement à la rupture égal à 212%, résistance à la rupture égale à 5,6MPa (ces mesures sont faites sur des éprouvettes haltères suivant la norme NFT 46-002 sur films secs),
- une très bonne tenue à l'abrasion (usure d'un angle de vitre contre le joint peint),
- réduit ou fait disparaître les vibrations sonores qui existent lors du frottement de pièces de carrosserie.

## Revendications

1. Composition de peinture ou de vernis comprenant, en matières sèches :
- de 10 à 50 parts en poids d'au moins un polyuréthane sous forme d'émulsion aqueuse,
- de 10 à 30 parts en poids d'au moins deux polymères ou copolymères acryliques sous forme d'émulsion aqueuse,
- de 10 à 70 parts en poids de charges minérales ou organiques,
- de 5 à 20 parts en poids d'agents de mise en oeuvre,
- de 0 à 10 parts en poids de réticulant
ladite composition comprenant en outre de 40 à 150 parties en poids d'eau, les parts étant données en poids de matière active dans la composition, **caractérisée en ce que** les polymères ou copolymères acryliques sont choisis de telle sorte que l'un ait une température de transition vitreuse comprise entre 0°C et +5°C, et l'autre ait une température de transition vitreuse comprise entre -40°C et -30°C.

2. Composition selon la revendication 1, **caractérisée en ce que** le polyuréthane est choisi parmi les dérivés de polyesters aliphatiques.

3. Composition selon la revendication 1 ou la revendication 2, **caractérisée en ce que** le polyuréthane est choisi parmi ceux répondant aux critères suivants :
- résistance à la rupture supérieure ou égale à 25MPa, préférentiellement supérieure ou égale à 30MPa,
- allongement à la rupture supérieur ou égal à 400%, préférentiellement supérieur ou égal à 450%,
- module à 100% inférieur ou égal à 10MPa, préférentiellement inférieur ou égal à 8MPa.

4. Composition selon l'une quelconque des revendications 1 à 3, **caractérisée en ce qu'**elle comprend :
- de 10 à 30 parts en poids d'au moins un polyuréthane sous forme d'émulsion aqueuse,
- de 10 à 30 parts en poids d'au moins deux polymères ou copolymères acryliques sous forme d'émulsion aqueuse,
- de 10 à 45 parts en poids de charges minérales ou organiques,
- de 5 à 15 parts en poids d'agents de mise en oeuvre,
- de 0 à 10 parts en poids de réticulant
ladite composition comprenant en outre de 40 à 150 parties en poids d'eau, les parts étant données en poids de matière active dans la composition.

5. Composition selon l'une quelconque des revendications 1 à 4, **caractérisé en ce qu'**elle comprend :
- de 15 à 25 parts en poids d'au moins un polyuréthane sous forme d'émulsion aqueuse,
- de 15 à 25 parts en poids d'au moins deux polymères ou copolymères acryliques sous forme d'émulsion aqueuse,
- de 18 à 32 parts en poids de charges minérales ou organiques,
- de 8 à 12 parts en poids d'agents de mise en oeuvre,
- de 1 à 4 parts en poids de réticulant
- de 50 à 70 parts en poids d'eau.

6. Composition selon l'une quelconque des revendications 1 à 5, **caractérisé en ce qu'**elle comprend une quantité sensiblement équivalente, en poids de matière active, de polyuréthane et de polymères ou copolymères acryliques.

7. Composition selon l'une quelconque des revendications 1 à 3, **caractérisée en ce qu'**elle comprend :
- de 25 à 45 parts en poids d'au moins un polyuréthane sous forme d'émulsion aqueuse,
- de 15 à 25 parts en poids d'au moins deux polymères ou copolymères acryliques sous forme d'émulsion aqueuse,
- de 18 à 50 parts en poids de charges minérales ou organiques,
- de 10 à 18 parts en poids d'agents de mise en oeuvre,
- de 1 à 4 parts en poids de réticulant,
- de 50 à 70 parts en poids d'eau.

8. Procédé de protection d'une pièce en élastomère, ce procédé étant **caractérisé en ce que** :
- le produit de départ est une pièce en élastomère vulcanisé,
- la pièce en élastomère est traitée de façon à permettre l'adhérence sur sa surface,
- une composition de peinture ou de vernis selon l'une quelconque des revendications 1 à 7, est appliquée sur tout ou partie de la pièce en élastomère,
- la pièce recouverte d'un film de peinture ou de vernis est séchée.

9. Procédé selon la revendication 8, **caractérisé en ce que** l'élastomère est choisi parmi : le caoutchouc naturel, les caoutchoucs nitrile (NBR), les terpolymères d'éthylène de propylène et d'un diène (EPDM), les chloroprènes (CR), les polyisobutylènes (PIB).

10. Procédé selon l'une quelconque des revendications 8 et 9, **caractérisé en ce que** l'application de la composition de vernis ou de peinture se fait au pistolet pneumatique ou au bol électrostatique.

11. Procédé selon l'une quelconque des revendications 8 à 10, **caractérisé en ce que** le séchage de la peinture se fait à une température supérieure ou égale à 100°C.

12. Utilisation d'une composition selon l'une quelconque des revendications 1 à 7 pour l'obtention d'un film présentant les caractéristiques suivantes : allongement à la rupture supérieur ou égal à 100%, résistance à la rupture supérieure ou égale à 3MPa.

13. Article constitué d'une pièce en matériau élastomère et d'un film de protection obtenu par le dépôt et le séchage, sur tout ou partie de la pièce en élastomère, d'une composition de peinture ou de vernis selon l'une quelconque des revendications 1 à 7.

14. Article selon la revendication 13, **caractérisé en ce qu'**il est doté de propriétés supérieures à la pièce en matériau élastomère dont il est issu en ce qui concerne au moins l'un des critères suivants : protection contre l'abrasion, résistance à la lumière et aux agressions climatiques, résistance aux produits de lavage, faible coefficient de frottement, faibles vibrations sonores.

15. Article selon la revendication 13 ou la revendication 14, **caractérisé en ce qu'**il est un profilé d'étanchéité ou une pièce anti-vibratoire.

## Claims

1. A paint or varnish composition comprising, as solids:
- from 10 to 50 parts by weight of at least one polyurethane in aqueous emulsion form;
- from 10 to 30 parts by weight of at least two acrylic polymers or copolymers in aqueous emulsion form;
- from 10 to 70 parts by weight of mineral or organic fillers;
- from 5 to 20 parts by weight of processing aids; and
- from 0 to 10 parts by weight of crosslinking agent;
said composition furthermore comprising from 40 to 150 parts by weight of water, the parts being given by weight of active material in the composition, wherein the acrylic polymers or copolymers are chosen in such a way that one has a glass transition temperature between 0° and +5°C and the other has a glass transition temperature between -40°C and -30°C.

2. The composition as claimed in claim 1, wherein the polyurethane is chosen from derivatives of aliphatic polyesters.

3. The composition as claimed in claim 1 or claim 2, wherein the polyurethane is chosen from those that meet the following criteria:
- tensile strength greater than or equal to 25 MPa, preferably greater than or equal to 30 MPa;
- elongation at break greater than or equal to 400%, preferably greater than or equal to 450%; and
- 100% modulus less than or equal to 10 MPa, preferably less than or equal to 8 MPa.

4. The composition as claimed in any one of claims 1 to 3, which comprises:
- from 10 to 30 parts by weight of at least one polyurethane in aqueous emulsion form;
- from 10 to 30 parts by weight of at least two acrylic polymers or copolymers in aqueous emulsion form;
- from 10 to 45 parts by weight of mineral or organic fillers;
- from 5 to 15 parts by weight of processing aids;
- from 0 to 10 parts by weight of crosslinking agent
said composition furthermore comprising from 40 to 150 parts by weight of water, the parts being given by weight of active material in the composition.

5. The composition as claimed in any one of claims 1 to 4, which comprises:
- from 15 to 25 parts by weight of at least one polyurethane in aqueous emulsion form;
- from 15 to 25 parts by weight of at least two acrylic polymers or copolymers in aqueous emulsion form;
- from 18 to 32 parts by weight of mineral or organic fillers;
- from 8 to 12 parts by weight of processing aids;
- from 1 to 4 parts by weight of crosslinking agent; and
- from 50 to 70 parts by weight of water.

6. The composition as claimed in any one of claims 1 to 5, which comprises an approximately equivalent amount, by weight of active material, of polyurethane and of acrylic polymers or copolymers.

7. The composition as claimed in any one of claims 1 to 3, which comprises:
- from 25 to 45 parts by weight of at least one polyurethane in aqueous emulsion form;
- from 15 to 25 parts by weight of at least two acrylic polymers or copolymers in aqueous emulsion form;
- from 18 to 50 parts by weight of mineral or organic fillers;
- from 10 to 18 parts by weight of processing aids;
- from 1 to 4 parts by weight of crosslinking agent; and
- from 50 to 70 parts by weight of water.

8. A method of protecting an elastomer article, this method being one in which:
- the starting product is an article made of a vulcanized elastomer;
- the elastomer article is treated so as to allow adhesion to its surface;
- a paint or varnish composition as described in any one of claims 1 to 7 is applied to all or part of the elastomer article; and
- the article coated with a paint or varnish film is dried.

9. The method as claimed in claim 8, wherein the elastomer is chosen from: natural rubber, nitrile rubbers (NBR), ethylene-propylene-diene terpolymers (EPDM), chloroprenes (CR) and polyisobutylenes (PIB).

10. The method as claimed in either of claims 8 and 9, wherein the varnish or paint composition is applied by an air spray gun or an electrostatic spray gun.

11. The method as claimed in any one of claims 8 to 10, wherein the paint is dried at a temperature of 100°C or higher.

12. The use of a composition as claimed in any one of claims 1 to 7 for obtaining a film having the following characteristics: elongation at break greater than or equal to 100% and tensile strength greater than or equal to 3 MPa.

13. An article formed from a part made of an elastomer material and from a protective film obtained by depositing, on all or part of the elastomer part, of a paint or varnish composition as claimed in any one of claims 1 to 7 and by drying said composition.

14. The article as claimed in claim 13, which is provided with properties that are superior to the part made of elastomer material from which they are obtained, as regards at least one of the following criteria: protection from abrasion, light and weather resistance, resistance to washing products, low friction coefficient and low sound vibrations.

15. The article as claimed in claim 13 or claim 14, which is a sealing strip or an antivibration part.

## Patentansprüche

1. Anstrichmittel- oder Lackzusammensetzung, umfassend als Trockenmasse
- 10 bis 50 Gewichtsteile wenigstens eines Polyurethans in Form einer wässrigen Emulsion,
- 10 bis 30 Gewichtsteile von wenigstens 2 Acrylpolymeren oder -copolymeren in Form einer wässrigen Emulsion;
- 10 bis 70 Gewichtsteile mineralischer oder organischer Füllstoffe;
- 5 bis 20 Gewichtsteile Verarbeitungshilfsmittel;
- 0 bis 10 Gewichtsteile Vernetzungsmittel,
wobei die Zusammensetzung außerdem 40 bis 150 Gewichtsteile Wasser umfasst, wobei die Teile als Gewicht an aktivem Material in der Zusammensetzung angegeben sind, **dadurch gekennzeichnet, dass** die Acrylpolymere oder -copolymere derart ausgewählt sind, dass das eine eine Glasübergangstemperatur zwischen 0°C und +5°C hat und das andere eine Glasübergangstemperatur zwischen -40°C und -30°C hat.

2. Zusammensetzung nach Anspruch 1, **dadurch gekennzeichnet, dass** das Polyurethan unter den aliphatischen Polyesterderivaten ausgewählt ist.

3. Zusammensetzung nach Anspruch 1 oder Anspruch 2, **dadurch gekennzeichnet, dass** das Polyurethan unter denen ausgewählt ist, die die folgenden Kriterien erfüllen:
- eine Bruchfestigkeit von über oder gleich 25 MPa, vorzugsweise über oder gleich 30 MPa,
- Bruchdehnung über oder gleich 400%, vorzugsweise über oder gleich 450%,
- Modul bei 100% Dehnung unter oder gleich 10 MPa, vorzugsweise unter oder gleich 8 MPa.

4. Zusammensetzung nach einem der Ansprüche 1 bis 3, **dadurch gekennzeichnet, dass** sie umfasst:
- 10 bis 30 Gewichtsteile wenigstens eines Polyurethans in Form einer wässrigen Emulsion,
- 10 bis 30 Gewichtsteile von wenigstens zwei Acrylpolymeren oder -copolymeren in Form einer wässrigen Emulsion,
- 10 bis 45 Gewichtsteile mineralischer oder organischer Füllstoffe,
- 5 bis 15 Gewichtsteile Verarbeitungshilfsmittel,
- 0 bis 10 Gewichtsteile Vernetzungsmittel,
wobei die genannte Zusammensetzung außerdem 40 bis 150 Gewichtsteile Wasser umfasst, wobei die Teile als Gewicht an aktivem Material in der Zusammensetzung angegeben sind.

5. Zusammensetzung nach einem der Ansprüche 1 bis 4, **dadurch gekennzeichnet, dass** sie umfasst:
- 15 bis 25 Gewichtsteile wenigstens eines Polyurethans in Form einer wässrigen Emulsion;
- 15 bis 25 Gewichtsteile von wenigstens zwei Acrylpolymeren oder -copolymeren in Form einer wässrigen Emulsion,
- 18 bis 32 Gewichtsteile mineralischer oder organischer Füllstoffe,
- 8 bis 12 Gewichtsteile Verarbeitungshilfsmittel,
- 1 bis 4 Gewichtsteile Vernetzungsmittel,
- 50 bis 70 Gewichtsteile Wasser.

6. Zusammensetzung nach einem der Ansprüche 1 bis 5, **dadurch gekennzeichnet, dass** sie, ausgedrückt als Gewicht an aktivem Material, eine ungefähre äquivalente Menge an Polyurethan und Acrylpolymeren oder -copolymeren umfasst.

7. Zusammensetzung nach einem der Ansprüche 1 bis 3, **dadurch gekennzeichnet, dass** sie umfasst:
- 25 bis 45 Gewichtsteile wenigstens eines Polyurethans in Form einer wässrigen Emulsion,
- 15 bis 25 Gewichtsteile von wenigstens 2 Acrylpolymeren oder -copolymeren in Form einer wässrigen Emulsion,
- 18 bis 50 Gewichtsteile mineralischer oder organischer Füllstoffe,
- 10 bis 18 Gewichtsteile Verarbeitungshilfsmittel,
- 1 bis 4 Gewichtsteile Vernetzungsmittel,
- 50 bis 70 Gewichtsteile Wasser.

8. Verfahren zum Schützen eines Elastomerteils, wobei das Verfahren **dadurch gekennzeichnet ist, dass**:
- das Ausgangsprodukt ein vulkanisiertes Elastomerteil ist,
- das Elastomerteil derart behandelt wird, dass eine Adhäsion auf seiner Oberfläche möglich wird,
- eine Anstrichmittel- oder Lackzusammensetzung gemäß einem der Ansprüche 1 bis 7 auf dem ganzen Elastomerteil oder einem Teil davon aufgetragen wird,
- das mit einem Anstrichmittel- oder Lackfilm überzogene Teil getrocknet wird.

9. Verfahren nach Anspruch 8, **dadurch gekennzeichnet, dass** das Elastomer ausgewählt wird unter: Naturkautschuk, Nitrilkautschuken (NBR), Terpolymeren aus Ethylen, Propylen und einem Dien (EPDM), Chloroprenen (CR), Polyisobutylenen (PIB).

10. Verfahren nach einem der Ansprüche 8 und 9, **dadurch gekennzeichnet, dass** das Auftragen der Anstrichmittel- oder Lackzusammensetzung durch eine pneumatische Pistole oder in einem elektrostatischen Bad erfolgt.

11. Verfahren nach einem der Ansprüche 8 bis 10, **dadurch gekennzeichnet, dass** die Trocknung des Anstrichmittels bei einer Temperatur über oder gleich 100°C erfolgt.

12. Verwendung einer Zusammensetzung nach einem der Ansprüche 1 bis 7 zum Erhalt eines Films, der die folgenden Merkmale aufweist: Bruchdehnung über oder gleich 100%, Bruchfestigkeit über oder gleich 3 MPa.

13. Gegenstand, der durch ein Teil aus Elastomermaterial und einem Schutzfilm, der durch Abscheidung und Trocknung einer Anstrichmittel- oder Lackzusammensetzung nach einem der Ansprüche 1 bis 7 auf dem ganzen Elastomerteil oder einem Teil davon erhalten wurde, gebildet wird.

14. Gegenstand nach Anspruch 13, **dadurch gekennzeichnet, dass** er mit Eigenschaften ausgestattet ist, die im Vergleich zu denen des Teils aus Elastomermaterial, aus dem er entstanden ist, bezüglich wenigstens eines der folgenden Kriterien überlegen ist: Schutz gegen Abrieb, Beständigkeit gegenüber Licht und klimatischen Angriffen, Beständigkeit gegenüber Waschprodukten, niedriger Reibungskoeffizient, geringe Schallschwingungen.

15. Gegenstand nach Anspruch 13 oder Anspruch 14, **dadurch gekennzeichnet, dass** er ein Dichtungsprofil oder ein Antivibrationsteil ist.
